# EUROPEAN PATENT SPECIFICATION

(11) **EP 3 881 245 B1**
(45) Date of publication and mention of the grant of the patent: **18.09.2024**
(21) Application number: 19702794.9
(22) Date of filing: 14.01.2019
(51) Int. Cl.: G06N 3/063, G06N 3/096, G06N 3/045, G06N 3/0464, G07C 3/14

(54) **HARDWARE ACCELERATOR EXTENSION TO TRANSFER LEARNING - EXTENDING/FINISHING TRAINING TO THE EDGE**
ERWEITERUNG DES HARDWARE-BESCHLEUNIGERS ZUM TRANSFERLERNEN - ERWEITERUNG/ABSCHLUSS DES TRAININGS BIS ZUR EDGE
EXTENSION D'ACCÉLÉRATEUR MATÉRIEL POUR TRANSFÉRER UN APPRENTISSAGE - EXTENSION/FINITION D'ENTRAÎNEMENT AU BORD

(43) Date of publication of application: 22.09.2021
(73) Proprietor: Siemens Aktiengesellschaft, 80333 München (DE)
(72) Inventor: CLAUSSEN, Heiko, Wayland, MA 01778 (US); SEHR, Martin, Kensington, California 94707 (US); SOLOWJOW, Eugen, Berkeley, California 94709 (US); WEN, Chengtao, Redwood City, California 94065 (US); APARICIO OJEA, Juan L., Moraga, California 94556 (US)
(74) Representative: Isarpatent
(86) International application number: PCT/US2019/013443
(87) International publication number: WO 2020/149820

(56) References cited:
- US-A1- 2017 193 400
- US-A1- 2017 270 406
- PAUL WHATMOUGH ET AL: "Energy Efficient Hardware for On-Device CNN Inference via Transfer Learning", ARXIV.ORG, CORNELL UNIVERSITY LIBRARY, 201 OLIN LIBRARY CORNELL UNIVERSITY ITHACA, NY 14853, 4 December 2018 (2018-12-04), XP080989184
- SONG MINGCONG ET AL: "In-Situ AI: Towards Autonomous and Incremental Deep Learning for IoT Systems", 2018 IEEE INTERNATIONAL SYMPOSIUM ON HIGH PERFORMANCE COMPUTER ARCHITECTURE (HPCA), IEEE, 24 February 2018 (2018-02-24), pages 92 - 103, XP033341941, DOI: 10.1109/HPCA.2018.00018
- ANONYMOUS: "AI accelerator - Wikipedia", 30 December 2018 (2018-12-30), XP055624356, Retrieved from the Internet <URL:https://en.wikipedia.org/w/index.php?title=AI_accelerator&oldid=876003335> [retrieved on 20190919]

## Description

### TECHNICAL FIELD

The present disclosure relates generally to a hardware accelerator extension to transfer learning in order to extending/finishing training to the edge. The various systems, methods, and apparatuses described herein may be applied to, for example, developing highly customized neural networks at internet of things (IoT) and other edge devices.

### BACKGROUND

Classification is a machine learning task that predicts a class for a given set of data points. In recent years, there has been a significant accuracy improvement in classification tasks such as image and speech recognition. New approaches use artificial deep neural networks and achieve super human accuracies on large public datasets such as ImageNet. This development is fueled by the availability of extremely large datasets and datacenter/cloud-based computing power for training. The learning on mostly consumer centric domains (e.g., based on freely shared photos) is now being transferred to other domains, such as the industrial and healthcare domains. Applications include deep reinforcement learning based optimization of large power generating gas turbine emissions, vision based robotic control and grasping of non-standard objects, visual quality control of manufactured goods, etc.

A challenge that industrial applications of deep neural networks face is that there typically is not as much data available as in other domains in which these algorithms have been successfully deployed. For example, one cannot record thousands of representations of one part with a particular defect to detect it in the future automatically. In addition, many industrial applications require high data security and not all vendors are comfortable to share or even store this data in the cloud. Moreover, there are constraints regarding latencies, common real-time requirements, bandwidth and the requirement to run the facility offline without data connection.

These considerations motivate a current trend from cloud applications to edge computing applications. The term "edge computing" refers to computing that is performed on device nodes that are located close to, or on, a machine as opposed to a centralized cloud computing environment. While the edge approach addresses some of the challenges discussed above, edge computing also brings the problem of limiting available computing performance. Complex deep neural networks cannot be run in real-time applications on low power CPUs, resulting in a trend towards AI specific hardware accelerators. However, data centers used to train large deep neural network in the cloud still have significantly more performance than edge AI accelerators that have to run on a few watts to allow passive cooling and thus high reliability without moving parts. For example, AlphaGO Lee was trained on 48TPUs in a datacenter for several months to achieve maximum performance as described in Silver, D. et al Mastering the game of Go with deep neural networks and tree search. Nature 529, 484-489 (2016).

Flexible solutions that allow training on the edge are CPU or GPU based. Unfortunately, these solutions are either computationally limited in comparison to AI specific hardware accelerators or require significantly more power, which limits their use in the industrial edge environment and other operating environments where edge devices are used.

Examplesrelated to transfer learning in order to extend/finish training on the edge are disclosed in PAUL WHATMOUGH ET AL, "Energy Efficient Hardware for On-Device CNN Inference via Transfer Learning",ARXIV.ORG and SONG MINGCONG ET AL, "In-Situ AI: Towards Autonomous and Incremental Deep Learning for IoT Systems",2018 IEEE

### SUMMARY

Embodiments of the present invention address and overcome one or more of the above shortcomings and drawbacks, by providing methods, systems, and apparatuses related to a hardware accelerator extension to transfer learning by extending/finishing training to the edge.

The invention is set out in the appended set of claims.

The dependent claims set out particular embodiments.

According to non-claimed embodiments, a system for training a neural network comprises a computer and an edge device. The computer divides a neural network into a domain independent portion and a domain dependent portion, wherein at least the domain independent portion is pre-trained. The edge device receives the domain independent portion and domain dependent portion from the computer via a network. The edge device deploys the domain independent portion of the neural network onto a dedicated neural network processing unit of the hardware accelerator of the edge device. The domain dependent portion of the neural network is deployed onto one or more additional processors of the hardware accelerator of the edge device. The edge device trains the domain dependent portion on the additional processors of the hardware accelerator using data collected at the edge device. Following the deployments and the retraining, the edge device uses the domain independent portion and the domain dependent portion to perform one or more tasks.

As a variation to the system set forth above, in some embodiments, the edge device only receives the domain independent portion from the computer via a network. This domain independent portion of the neural network is deployed onto a dedicated neural network processing unit of the hardware accelerator of the edge device. Then the edge device generates a new version of the domain dependent portion of the neural network onto one or more additional processors of the hardware accelerator of the edge device. The edge device trains the new version of the domain dependent portion on the additional processors of the hardware accelerator using data collected at the edge device. Following the deployments and the training, the edge device uses the new version of the domain independent portion and the domain dependent portion to perform one or more tasks.

Additional features and advantages of the invention will be made apparent from the following detailed description of illustrative embodiments that proceeds with reference to the accompanying drawings.

### BRIEF DESCRIPTION OF THE DRAWINGS

The foregoing and other aspects of the present invention are best understood from the following detailed description when read in connection with the accompanying drawings. For the purpose of illustrating the invention, there is shown in the drawings embodiments that are presently preferred, it being understood, however, that the invention is not limited to the specific instrumentalities disclosed. Included in the drawings are the following Figures:
FIG. 1A shows an example edge device architecture configured in accordance with non-claimed embodiments of the present invention;
FIG. 1B shows an alternative edge device architecture configured in accordance with some embodiments of the present invention; and
FIG. 2 illustrates a computer-implemented method for training a neural network on a hardware accelerator of an edge device, according to some embodiments.

### DETAILED DESCRIPTION

The following disclosure describes the present invention according to several embodiments directed at methods, systems, and apparatuses related to hardware accelerator extension to transfer learning by extending/finishing training to the edge.

In typical neural network deployments, maximally large data sets are recorded at the edge, and uploaded to the cloud to retrain the neural network for optimal performance. The network is then downloaded and applied at the edge. This process is repeated whenever a new class needs to be added to the network. The reason for this approach is that neural network hardware accelerators are designed to maximize their inference performance. Fast, iterative changing of neural network weights, required for training, are not considered in the architecture, as the hardware is computationally not powerful enough for full-blown training and will not be exposed to millions of examples from large databases at the edge. An alternative is to collect the data and do the training at a local server for data privacy concerns. Thereafter, the updated network is uploaded back on the edge hardware for future inferences. Neither of these approaches allows training with minimal data, inside the edge device (without interfacing other systems), and while allowing continuous operation of the device inference (i.e., without stopping the factory processing line).

With the techniques described herein a neural network is divided into a fixed and a flexible part. The fixed part is pre-trained, for example, with millions of examples in the cloud and used as feature extraction layers. The fixed part can then be deployed on the inference-optimized parts of the hardware accelerators. The flexible part of the neural network is used to train new classes and adapt current classifiers on the fly. This flexible part can then be deployed in the flexible parts of the hardware accelerator such as Streaming Hybrid Architecture Vector Engine (SHAVE) processors, GPU, or CPUs. By performing neural network training/adaptation at the edge, on low power hardware we can enable more flexible applications including continuous learning based approaches. This will make the update and refinement process of neural networks significantly more efficient than for conventional solutions.

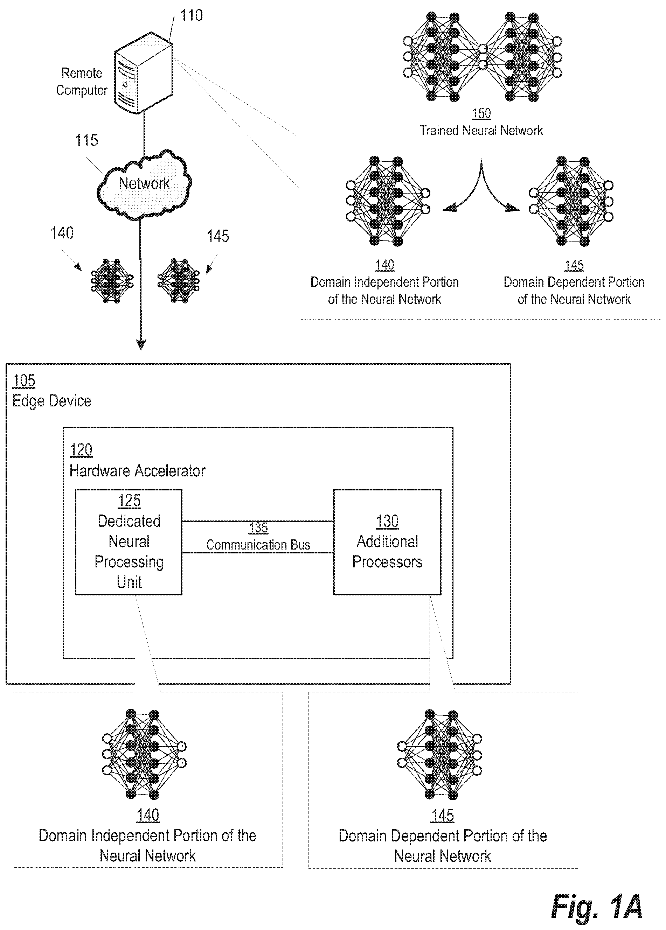

FIG. 1A shows an example edge device architecture configured in accordance with non-claimed embodiments of the present invention. This Edge Device 105 is connected to a Remote Computer 110 over a Network 115. The main component of the Edge Device 105 in this example is Artificial Intelligence (AI) Hardware Accelerator 120. The Hardware Accelerator 120 includes a Dedicated Neural Network Processing Unit 125 comprising one or more processing units optimized for executing neural networks at high speed and low power. The Hardware Accelerator 120 further includes one or more Additional Processors 130. These Additional Processors 130 may include, for example, SHAVE processors, Graphical Processing Units (GPUs), or even central processing units (CPUs). A single type of processor may be employed, or combinations of different types of processors (e.g., SHAVE processors and CPUs) may be used with the present invention. A Communication Bus 135 connects the Dedicated Neural Network Processing Unit 125 and the Additional Processors 130. Non-limiting examples of hardware accelerators that may be used with the present invention include Intel's Myriad^{™} X VPU. In the Myriad^{™} X VPU, the Dedicated Neural Network Processing Unit 125 is embodied in the neural compute engine, while the Additional Processors 130 are embodied by Myriad's SHAVE cores.

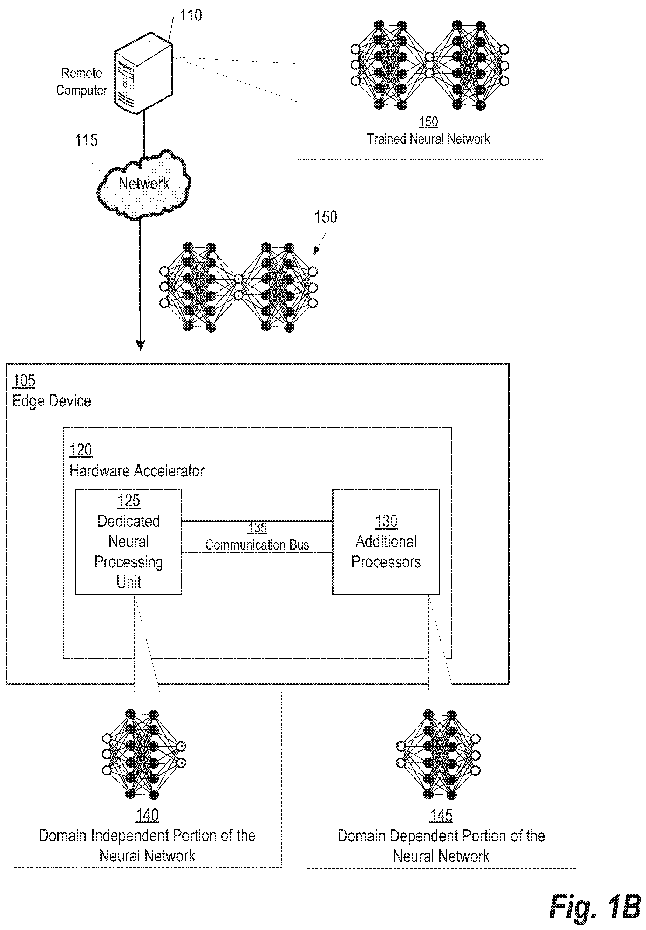

Continuing with reference to FIG. 1, at the Remote Computer 110 a Trained Neural Network 150 is divided into a Domain Independent Portion 140 and a Domain Dependent Portion 145. This division may be made, for example, by the original designer of the Trained Neural Network 150 or the Trained Neural Network 150 can be analyzed (e.g., using visualization tools known in the art) to ascertain the functional characteristics different portions of the Trained Neural Network 150.

The Domain Independent Portion 140 is the portion of the Trained Neural Network 150 which performs functions that can be used across multiple domains (e.g., feature extraction), while the Domain Dependent Portion 145 performs functions that are more specific to a particular domain or application (e.g., classification). The Hardware Accelerator 120 executes the Domain Independent Portion 140 and a Domain Dependent Portion 145 as a complete neural network using the Communication Bus 135 as necessary to transfer data between the two Portions 140, 145. Techniques for transferring data between different hardware accelerator components are generally known in the art and, in general, any such technique may be employed to facilitate the data transfer described above.

Each Portion 140, 145 comprises one or more layers. As is generally understood in the art, the term "layers" refers to a collection of nodes operating together at a specific depth within a neural network and different network architectures such as convolutional layers or polling layers. A neural network can be divided into different layers based on its underlying architecture. Research on deep neural networks has shown that the front layers in a network resemble Gabor filters or color blobs. Similar functions have been used in classical image processing approached for preprocessing and feature extraction. These features are then combined in the later layers of the network to distinguish between classes or perform other functions. The domain specificity of different layers of a neural network is analyzed in: J. Yosinski, J. Clune, Y. Bengio, and H. Lipson. How transferable are features in deep neural networks? In Z. Ghahramani, M. Welling, C. Cortes, N. Lawrence, and K. Weinberger, editors, Advances in Neural Information Processing Systems 27, pages 3320-3328. Curran Associates, Inc., Dec. 2014. It has been shown that by using this approach, it is possible to generate significantly higher recognition accuracies with small training sets than when using the limited data for training. For example, Matlab published a comparison where they trained a network with 5000 images per class from scratch and received 75% accuracy and then used a transfer learning approach where they only retrained the last 3 layers of AlexNet with 500 images per class and achieved 85% accuracy. See "Deep Learning with MATLAB: Transfer Learning with Neural Networks in MATLAB," available at https://www.mathworks.com/videos/transfer-learning-with-neural-networks-in-matlab-1492007175092.html (last accessed January 9, 2019).

For example, a convolutional neural network may be designed with the following layers: an input layer; a series of convolutional and pooling layers, and one or more fully connected layers. The input layer receives the raw pixel values of the image. The convolutional layer comprises a set of filters (or kernels) that activate when a specific feature is detected in the input data. For example, the convolutional layers may perform edge detection and/or curve detection. The pooling layer reduces the spatial size of the outputs of the convolutional layer. In some CNNs, a pooling layer is inserted periodically between successive convolutional layers. After the series of convolutional and max pooling layers, the high-level reasoning of the neural network is performed via one or more fully connected layers. For example, the fully connected layer may perform image processing tasks such as object detection, object segmentation, image classification, or localization. Techniques for implementing these image processing techniques are generally known in the art, and thus the techniques are not described in detail herein.

With the transfer learning technique described herein, the CNN can be trained with a large dataset (e.g., the ImageNet dataset). The input layer and the series of convolutional and pooling layers are used as a domain independent feature extractor. The fully connected layers of the trained CNN are replaced with domain dependent fully connected layers on the Edge Device 105. Effectively, this can be understood as retaining the complete CNN, where only the weights of the fully connected layers are allowed to change when performing the gradient descent/optimization procedure.

In some embodiments, the division between the Domain Independent Portion 140 and a Domain Dependent Portion 145 of the Trained Neural Network 150 may be made on the basis of the hardware capabilities of the Hardware Accelerator 120. For example, as noted above, the Domain Dependent Portion 145 can just comprise the fully connected layers of the Trained Neural Network 150 that perform classification (or other tasks) on extracted feature data. Depending on the task involved, it may be desirable to also include some of the other layers (e.g., one or more convolutional and pooling layers) in the Domain Dependent Portion 145 to allow these layers to be retrained based on data that is local to the edge device. In order to assess how to divide the Trained Neural Network 150, the Remote Computer 110 may query the Edge Device 105 for its hardware characteristics and then divide the Trained Neural Network 150 accordingly. These hardware characteristics may include generally any information that would be indicative of the processing capabilities of the Edge Device 105. This information may include, without limitation, processing speed, available RAM, and bus speed of the Hardware Accelerator 120.

FIG. 1B shows a variation on the example of FIG. 1A. Here, rather than dividing the Trained Neural Network 150 on the Remote Computer 110 and send the two Portions to 140, 145 to the Edge Device, the Remote Computer 110 simply sends the complete Trained Neural Network 150. Then, according to the invention, the Edge Device 105 divides the Trained Neural Network 150 into the Domain Independent Portion 140 and the Domain Dependent Portion 145. In some embodiments, the Trained Neural Network 150 may be delivered to the Edge Device 105 with instructions specifying the hardware characteristics required to include certain layers in the Domain Dependent Portion 145. In this way, the Edge Device 105 can perform the division locally based on an evaluation of its hardware characteristics.

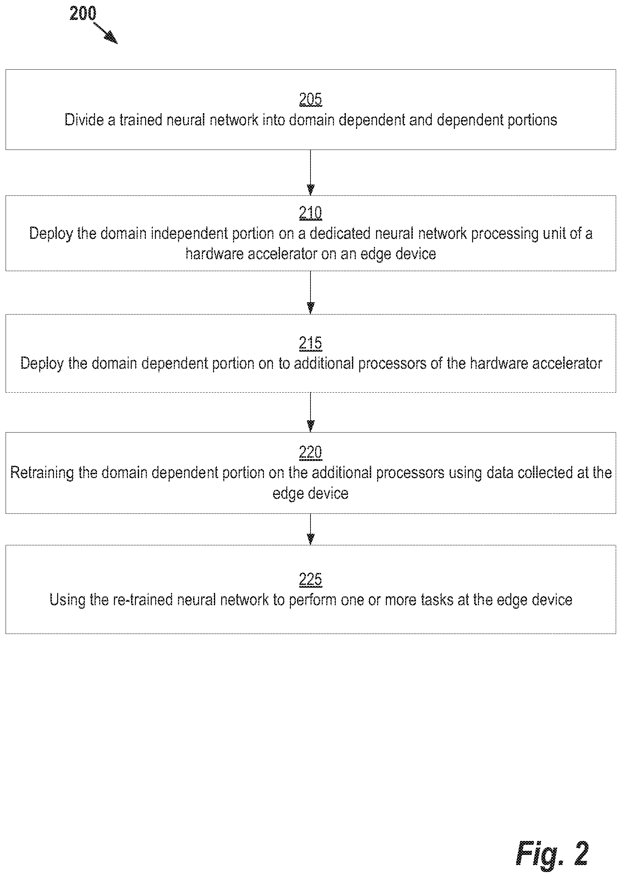

FIG. 2 illustrates a computer-implemented method 200 for training a neural network on a hardware accelerator of an edge device, according to some embodiments. This method 200 may be used to allow customization of a pre-trained neural network at an edge device. For example, in one embodiment, the neural network is trained using a first set of data that is not specific to a factory operating environment. In general this data can take any form and will vary based on the application. Non-limiting examples of the training data include generic image and/or audio data. A domain independent version is created and can be retrained at the edge device using a second set of data that is specific to the factory operating environment. It should be noted that "domain independent" does not necessarily imply that the original neural network is entirely generic. For example, a neural network can be trained based on library of sensor measurements collected from a group of factories. A portion of this neural network can then be re-trained at an edge device of a particular factory to refine the neural network with locally collected sensor measurements.

Starting at step 205, a trained neural network is divided into a domain independent portion and a domain dependent portion. In non-claimed embodiments, the trained neural network is divided at a remote computer system connected to the edge device over a network. For example, in some embodiments, the neural network portions are transferred as one or more Extensible Markup Language (XML) files describing the architecture of the network and weights for each node. In other embodiments, the neural network is transferred as one or more executable applications compiled for the architecture of the edge computer. According to the invention, the trained neural network is divided at the edge device using the additional processors. The number of layers of the trained neural network included in the domain dependent portion may be selected, for example, based on hardware characteristics of the edge device.

Continuing with reference to FIG. 2, at step 210, the domain independent portion of the neural network is deployed onto a dedicated neural network processing unit of the hardware accelerator of the edge device. The hardware accelerator may include in silicon optimized neural network specific operations such as convolutions or matrix multiplication or extremely fast memory-compute connectivity optimized for common neural network design execution. The domain dependent portion of the neural network is deployed at step 215 onto one or more additional processors of the hardware accelerator of the edge device. The method of deployment can vary depending on how the neural network was developed and the architecture of the edge device. However, in general any deployment technique known in the art may be used.

The domain dependent portion is re-trained at step 220 on the additional processors of the hardware accelerator using data collected at the edge device. For example, in one embodiment, the edge device is a component with in a factory setting that acts as a controller. The edge device receives measurements, makes predictions based on those measurements, and then generates one or more outputs that control factory devices. In this case, the measurement data gathered during operations can be used to re-train the domain dependent portion of the neural network. Note that this method of re-training not only allows device-level customization of the neural network, but also training with higher data fidelity than may be available at remote computing system. For example, sensor measurements may be gathered at 0.01 second intervals and 10 seconds worth of data may be required to make a prediction. If the data needs to be transferred to a remote computer, storage and bandwidth requirements may require the data to be sampled on a per-second basis, thus requiring the training to be performed based on 10 measurements. However, at the edge device, every measurement can be used for training, thus potentially increasing the accuracy of overall model. Finally, once the neural network is re-trained, the edge device uses it to perform one or more tasks at step 225. For example, to continue with the examples set forth above, the edge device may classify image data and generate an output that is used to control a factory device.

In some embodiments, the remote computer system is not transferred at the domain dependent portion to the edge device; instead, the domain dependent portion is fully generated at the edge based on edge data. However, providing a pre-trained domain dependent portion with the same class outputs should help the conversion speed of the algorithms. This assumes that the difference between the domains is not very large and one can find a convex path to the optimum classifier in the new domain. The training can also try this approach and if no sufficient classifier can be adapted; then one can reinitiate the fully connected layers in the domain dependent network randomly and start training this part from scratch.

To further illustrate the applicability of the technique described in FIG. 2, imagine the use case where the output of an industrial process needs to be classified in good products and faulty products based on a camera image. It would be useful to define/specify the detected fault so that the next steps like a rework can be automated. As certain faults are very rare, there is no data available on these fault classes during the training phase. Using the approach applied in conventional systems one would need to stop production to ensure that no faults are missed, add the new data to the training and upload the new model before activating the production line again. This is a very costly and sometimes infeasible approach as there can be long ramp-up times of the machines until they produce at desired quality levels. This can be solved by using a Progressive Neural Network learning approach illustrated in: A. A. Rusu, N. C. Rabinowitz, G. Desjardins, H. Soyer, J. Kirkpatrick, K. Kavukcuoglu, R. Pascanu, and R. Hadsell. Progressive neural networks. arXiv preprint arXiv:1606.04671, 2016.

Similar to transfer learning, this approach borrows from previously found classifiers to minimize necessary parameter optimizers and take advantage of the larger dataset that was available to train the feature extraction parts of the network. The advantage of this approach is that previously learned classifiers are frozen and not affected by the training of a new classifier. This enables that the classification can continue during training without loss of accuracy. Again, the network can be split into a fixed, high performance optimized part and a flexible adaptive part. The training can be outsourced in the flexible layers of the hardware accelerator to enable operation in current edge hardware.

The training technique described above enables a large number of new applications through training at the edge. As noted above, one advantage of the disclosed techniques is that data does not need to be recorded and moved to a powerful machine for training resulting in a more efficient process. Given this minimal effort, the user will be able to adapt the training more frequently for finer adjustments. The user can give corrective feedback during operation for continuous learning at the edge. The performance of the classifier that uses large pre-trained networks from millions of examples as a basis and adapts to the use case by a small set of training data is significantly higher than a network that is trained from the few examples from scratch. Re-training and adding of classes can be done during online operation. This may result in reducing costly shutdowns of monitored production lines. In addition, training components on the edge generates a logical separation layer, enabling users to isolate parts of their processes from pre-training which may happen externally, such as on a cloud platform.

## Claims

1. A computer-implemented method (200) for training a neural network on an Artificial Intelligence, AI, hardware accelerator (120) of an edge device (105), the method comprising:
dividing (205) a trained neural network (150) into a domain independent portion (140) and a domain dependent portion (145), wherein the domain independent portion (140) is the portion of the trained neural network (150) which performs functions that can be used across multiple domain such as feature extraction, and the domain dependent portion (145) is the portion of the trained neural network (150) which performs functions that are more specific to a particular domain or application such as classification;
deploying (210) the domain independent portion (140) of the neural network onto an AI dedicated neural network processing unit (125) of the AI hardware accelerator (120) of the edge device (105);
deploying (215) the domain dependent portion (145) of the neural network onto one or more additional processors (130) of the AI hardware accelerator (120) of the edge device (105);
retraining (220) the domain dependent portion (145) on the additional processors (130) of the AI hardware accelerator (120) using data collected at the edge device (105),
wherein the trained neural network (150) is divided at the edge device (105) using the additional processors (130).

2. The method (200) of claim 1, wherein the number of layers of the trained neural network (150) included in the domain dependent portion (145) is selected based on hardware characteristics of the edge device (105).

3. The method (200) of claim 1, wherein the domain independent portion (145) performs feature extraction on a set of input data and the domain dependent portion (140) performs one or more image processing tasks on outputs for the domain independent portion,
wherein the image processing tasking comprise one or more of object detection, object segmentation, image classification, or localization.

4. The method (200) of claim 1, wherein the neural network is trained using a first set of data that is not specific to a factory operating environment and the domain dependent portion of the neural network is retrained using a second set of data that is specific to the factory operating environment.

5. The method (200) of claim 4, wherein the first set of data and second set of data comprise image data.

6. The method (200) of claim 4, wherein the first set of data and second set of data comprise audio data.

7. The method (200) of claim 1, wherein the additional processors of the hardware accelerator are SHAVE vector processors.

8. An edge device (105) connected to a remote computer system (110) over a network (115), the edge device (105) comprising:
an Artificial Intelligence, AI, hardware accelerator (120) comprising:
one or more communication buses (135),
an AI dedicated neural network processing unit (125) executing a domain independent portion (140) of a trained neural network (150), and
one or more additional processors (130) executing a domain dependent portion (145) of the trained neural network (150) connected to the domain independent portion over the communication buses,
wherein the domain independent portion (140) is the portion of the trained neural network (150) which performs functions that can be used across multiple domain such as feature extraction, and the domain dependent portion (145) is the portion of the trained neural network (150) which performs functions that are more specific to a particular domain or application such as classification;
wherein the edge device (105) is configured to divide the trained neural network (150) using the one or more additional processors (130),
wherein the edge device (105) is configured to re-train the domain dependent portion (145) by the one or more additional processors (130) using data collected at the edge device (105).

9. The edge device (105) of claim 8, wherein the number of layers of the trained neural network (150) included in the domain dependent portion (145) is selected based on hardware characteristics of the edge device (105).

10. The edge device (105) of claim 8, wherein the one or more additional processors (130) of the AI hardware accelerator (120) are SHAVE vector processors.

11. The edge device (105) of claim 8, wherein the one or more additional processors (130) of the AI hardware accelerator (120) are graphical processing units (GPUs).

12. The edge device (105) of claim 8, wherein the one or more additional processors (130) of the AI hardware accelerator (120) are central processing units (CPUs).

## Patentansprüche

1. Computerimplementiertes Verfahren (200) zum Trainieren eines neuronalen Netzes in einem Hardware-Beschleuniger (120) für künstliche Intelligenz, AI, einer Edge-Vorrichtung (105), wobei das Verfahren Folgendes umfasst:
Unterteilen (205) eines trainierten neuronalen Netzes (150) in einen domänenunabhängigen Abschnitt (140) und einen domänenabhängigen Abschnitt (145), wobei der domänenunabhängige Abschnitt (140) der Abschnitt des trainierten neuronalen Netzes (150) ist, der Funktionen, die über mehrere Domänen verwendet werden können, wie z. B. eine Merkmalsextraktion durchführt, und der domänenabhängige Abschnitt (145) der Abschnitt des trainierten neuronalen Netzes (150) ist, der Funktionen, die für eine bestimmte Domäne oder Anwendung spezifischer sind, wie z. B. eine Einstufung durchführt;
Bereitstellen (210) des domänenunabhängigen Abschnitts (140) des neuronalen Netzes in einer für AI fest zugeordneten Verarbeitungseinheit (125) für neuronale Netze des AI-Hardware-Beschleunigers (120) der Edge-Vorrichtung (105);
Bereitstellen (215) des domänenabhängigen Abschnitts (145) des neuronalen Netzes in einem oder mehreren zusätzlichen Prozessoren (130) des AI-Hardware-Beschleunigers (120) der Edge-Vorrichtung (105) und
Neutrainieren (220) des domänenabhängigen Abschnitts (145) in den zusätzlichen Prozessoren (130) des AI-Hardware-Beschleunigers (120) unter Verwendung von Daten, die bei der Edge-Vorrichtung (105) gesammelt wurden,
wobei das trainierte neuronale Netz (150) bei der Edge-Vorrichtung (105) unter Verwendung der zusätzlichen Prozessoren (130) unterteilt wird.

2. Verfahren (200) nach Anspruch 1, wobei die Anzahl von Schichten des trainierten neuronalen Netzes (150), die im domänenabhängigen Abschnitt (145) enthalten sind, auf der Grundlage von Hardware-Charakteristiken der Edge-Vorrichtung (105) gewählt wird.

3. Verfahren (200) nach Anspruch 1, wobei der domänenunabhängige Abschnitt (145) eine Merkmalsextraktion an einem Satz Eingangsdaten durchführt und der domänenabhängige Abschnitt (140) eine oder mehrere Bildverarbeitungsaufgaben an Ausgaben für den domänenunabhängigen Abschnitt durchführt, wobei die Bildverarbeitungsaufgaben eine Objektdetektion und/oder eine Objektsegmentierung und/oder eine Bildeinstufung und/oder eine Lokalisierung umfassen.

4. Verfahren (200) nach Anspruch 1, wobei das neuronale Netz unter Verwendung eines ersten Datensatzes trainiert wird, der nicht spezifisch für eine Fabrikbetriebsumgebung ist, und der domänenabhängige Abschnitt des neuronalen Netzes unter Verwendung eines zweiten Datensatzes neutrainiert wird, der für die Fabrikbetriebsumgebung spezifisch ist.

5. Verfahren (200) nach Anspruch 4, wobei der erste Datensatz und der zweite Datensatz Bilddaten umfassen.

6. Verfahren (200) nach Anspruch 4, wobei der erste Datensatz und der zweite Datensatz Audiodaten umfassen.

7. Verfahren (200) nach Anspruch 1, wobei die zusätzlichen Prozessoren des Hardware-Beschleunigers SHAVE-Vektorprozessoren sind.

8. Edge-Vorrichtung (105), die mit einem entfernten Computersystem (110) über ein Netz (115) verbunden ist, wobei die Edge-Vorrichtung (105) Folgendes umfasst:
einen Hardware-Beschleuniger (120) für künstliche Intelligenz, AI, der Folgendes umfasst:
einen oder mehrere Kommunikationsbusse (135),
eine für AI fest zugeordnete Verarbeitungseinheit (125) für neuronale Netze, die einen domänenunabhängigen Abschnitt (140) eines trainierten neuronalen Netzes (150) ausführt, und
einen oder mehrere zusätzliche Prozessoren (130), die einen domänenabhängigen Abschnitt (145) des trainierten neuronalen Netzes (150) ausführen, der mit dem domänenunabhängigen Abschnitt über die Kommunikationsbusse verbunden ist,
wobei der domänenunabhängige Abschnitt (140) der Abschnitt des trainierten neuronalen Netzes (150) ist, der Funktionen, die über mehrere Domänen verwendet werden können, wie z. B. eine Merkmalsextraktion durchführt, und der domänenabhängige Abschnitt (145) der Abschnitt des trainierten neuronalen Netzes (150) ist, der Funktionen, die für eine bestimmte Domäne oder Anwendung spezifischer sind, wie z. B. eine Einstufung durchführt;
die Edge-Vorrichtung (105) konfiguriert ist, das trainierte neuronale Netz (150) unter Verwendung des einen oder der mehreren zusätzlichen Prozessoren (130) zu unterteilen, und
die Edge-Vorrichtung (105) konfiguriert ist, den domänenabhängigen Abschnitt (145) durch den einen oder die mehreren zusätzlichen Prozessoren (130) unter Verwendung von Daten, die bei der Edge-Vorrichtung (105) gesammelt wurden, neu zu trainieren.

9. Edge-Vorrichtung (105) nach Anspruch 8, wobei die Anzahl von Schichten des trainierten neuronalen Netzes (150), die im domänenabhängigen Abschnitt (145) enthalten sind, auf der Grundlage von Hardware-Charakteristiken der Edge-Vorrichtung (105) gewählt wird.

10. Edge-Vorrichtung (105) nach Anspruch 8, wobei der eine oder die mehreren zusätzlichen Prozessoren (130) des AI-Hardware-Beschleunigers (120) SHAVE-Vektorprozessoren sind.

11. Edge-Vorrichtung (105) nach Anspruch 8, wobei der eine oder die mehreren zusätzlichen Prozessoren (130) des AI-Hardware-Beschleunigers (120) Graphikverarbeitungseinheiten (GPUs) sind.

12. Edge-Vorrichtung (105) nach Anspruch 8, wobei der eine oder die mehreren zusätzlichen Prozessoren (130) des AI-Hardware-Beschleunigers (120) Zentraleinheiten (CPUs) sind.

## Revendications

1. Procédé (200) mis en œuvre par ordinateur pour entraîner un réseau neuronal sur un accélérateur matériel d'intelligence artificielle, IA, (120) d'un dispositif de périphérie (105), le procédé comprenant les étapes suivantes :
diviser (205) un réseau neuronal entraîné (150) en une partie indépendante du domaine (140) et une partie dépendante du domaine (145), où la partie indépendante du domaine (140) est la partie du réseau neuronal entraîné (150) qui exécute des fonctions pouvant être utilisées dans plusieurs domaines, telles que l'extraction de caractéristiques, et la partie dépendante du domaine (145) est la partie du réseau neuronal entraîné (150) qui exécute des fonctions plus spécifiques à un domaine ou à une application en particulier, telles que la classification ;
déployer (210) la partie indépendante du domaine (140) du réseau neuronal sur une unité de traitement de réseau neuronal dédiée à l'IA (125) de l'accélérateur matériel d'IA (120) du dispositif de périphérie (105) ;
déployer (215) la partie dépendante du domaine (145) du réseau neuronal sur un ou plusieurs processeurs supplémentaires (130) de l'accélérateur matériel d'IA (120) du dispositif de périphérie (105) ;
réentraîner (220) la partie dépendante du domaine (145) sur les processeurs supplémentaires (130) de l'accélérateur matériel d'IA (120) à l'aide des données collectées sur le dispositif de périphérie (105),
le réseau neuronal entraîné (150) étant divisé au niveau du dispositif de périphérie (105) à l'aide des processeurs supplémentaires (130).

2. Procédé (200) selon la revendication 1, dans lequel le nombre de couches du réseau neuronal entraîné (150) inclus dans la partie dépendante du domaine (145) est sélectionné sur la base des caractéristiques matérielles du dispositif de périphérie (105).

3. Procédé (200) selon la revendication 1, selon lequel la partie indépendante du domaine (145) effectue une extraction de caractéristiques sur un ensemble de données d'entrée et la partie dépendante du domaine (140) effectue une ou plusieurs tâches de traitement d'image sur les sorties pour la partie indépendante du domaine,
les tâches de traitement d'image comprenant une ou plusieurs tâches de détection d'objet, de segmentation d'objet, de classification d'images ou de localisation.

4. Procédé (200) selon la revendication 1, dans lequel le réseau neuronal est entraîné à l'aide d'un premier ensemble de données qui n'est pas spécifique à un environnement d'exploitation d'usine et la partie dépendante du domaine du réseau neuronal est réentraînée à l'aide d'un deuxième ensemble de données qui est spécifique à l'environnement d'exploitation d'usine.

5. Procédé (200) selon la revendication 4, dans lequel le premier ensemble de données et le deuxième ensemble de données comprennent des données d'image.

6. Procédé (200) selon la revendication 4, dans lequel le premier ensemble de données et le deuxième ensemble de données comprennent des données audio.

7. Procédé (200) selon la revendication 1, dans lequel les processeurs supplémentaires de l'accélérateur matériel sont des processeurs vectoriels SHAVE.

8. Dispositif de périphérie (105) connecté à un système informatique distant (110) par l'intermédiaire d'un réseau (115), le dispositif de périphérie (105) comprenant :
un accélérateur matériel d'intelligence artificielle, IA, (120) comprenant :
un ou plusieurs bus de communication (135),
une unité de traitement de réseau neuronal dédiée à l'IA (125) exécutant une partie indépendante du domaine (140) d'un réseau neuronal entraîné (150), et
un ou plusieurs processeurs supplémentaires (130) exécutant une partie dépendante du domaine (145) du réseau neuronal entraîné (150) connecté à la partie indépendante du domaine par l'intermédiaire des bus de communication,
dans lequel la partie indépendante du domaine (140) est la partie du réseau neuronal entraîné (150) qui exécute des fonctions pouvant être utilisées dans plusieurs domaines, telles que l'extraction de caractéristiques, et la partie dépendante du domaine (145) est la partie du réseau neuronal entraîné (150) qui exécute des fonctions plus spécifiques à un domaine ou à une application en particulier, telles que la classification ;
dans lequel le dispositif de périphérie (105) est configuré pour diviser le réseau neuronal entraîné (150) à l'aide des un ou plusieurs processeurs supplémentaires (130),
dans lequel le dispositif de périphérie (105) est configuré pour réentraîner la partie dépendante du domaine (145) par les un ou plusieurs processeurs supplémentaires (130) à l'aide des données collectées sur le dispositif de périphérie (105).

9. Dispositif de périphérie (105) selon la revendication 8, dans lequel le nombre de couches du réseau neuronal entraîné (150) inclus dans la partie dépendante du domaine (145) est sélectionné en fonction des caractéristiques matérielles du dispositif de périphérie (105).

10. Dispositif de périphérie (105) selon la revendication 8, dans lequel les un ou plusieurs processeurs supplémentaires (130) de l'accélérateur matériel d'IA (120) sont des processeurs vectoriels SHAVE.

11. Dispositif de périphérie (105) selon la revendication 8, dans lequel les un ou plusieurs processeurs supplémentaires (130) de l'accélérateur matériel d'IA (120) sont des unités de traitement graphique (GPU).

12. Dispositif de périphérie (105) selon la revendication 8, dans lequel les un ou plusieurs processeurs supplémentaires (130) de l'accélérateur matériel d'IA (120) sont des unités centrales de traitement (CPU).
